# EUROPEAN PATENT APPLICATION

(11) **EP 3 838 365 A1**
(43) Date of publication of application: **23.06.2021**
(21) Application number: 19217859.8
(22) Date of filing: 19.12.2019
(51) Int. Cl.: B01D 24/12, B01D 35/027, B01D 35/157, C02F 1/00

(54) **FILTRATION DEVICE**

(71) Applicant: Brita GmbH, 65232 Taunusstein (DE)
(72) Inventor: SOBEK, Nicoletta, 65232 Taunusstein (DE); Wolf, Jürgen, 65830 Kriftel (DE)

(57) **Abstract**

Filtration device (2) comprising an inlet funnel (4) and a filter cartridge (20), the inlet funnel (4) having a sealing seat and a chamber below the sealing seat, the chamber comprising an outer wall and a bottom wall (8), the bottom wall (8) having an outlet (12), the filter cartridge (20) comprising a housing (22) having a top side and a bottom side (28) as well as a sealing rim (31) located between the top side and the bottom side (28), the filter cartridge (20) having a protrusion that enters the outlet (12) when the filter cartridge (20) is inserted into the inlet funnel (4), thereby reducing a nominal cross-section of the outlet (12). The protrusion has a switch (50) that is movable between a first position and a second position, such that in the first position the nominal cross-section is reduced to a flow area A and in the second position the nominal cross-section is reduced to a flow area B > A.

## Description

The present invention relates to a filtration device as well as a filter cartridge.

Filtration devices are being used as water filters for everyday use in households, in which case they are also called table water filters. They are primarily used for clearing tap water of unwanted substances. Among these substances are chloride and hardness builders such as calcium and magnesia, but also lead, which finds its way into tap water through the use of lead pipes, especially in older houses.

Table water filters are gravity-operated. Besides the pouring of tap water into the water filter, no work is necessary for filtering the water. The water simply flows downwards through a filter cartridge and into a receptacle for the filtered water due to the gravitational force. The filter cartridge is accordingly also gravity-operated.

One filtration device known from EP 1 230 166 B1 comprises an inlet funnel having a bottom wall, which is provided with an opening for a filter cartridge. The filter cartridge is plugged into the opening, creating a seal between the opening and a sealing rim of the filter cartridge. In use, water is introduced into the inlet funnel from above and then flows into the filter cartridge through water inlets. Granular treatment media for the water is located inside of the filter cartridge. The treatment media usually comprises ion exchange resin and/or active coal, but other components may be used as treatment media as well. In the filter cartridge the water is treated and then exits the filter cartridge downwards through water outlets at the bottom of the filter cartridge. The filter cartridge is also provided with air outlets at its very top in order to allow air from inside the filter cartridge to exit the filter cartridge upwards at the beginning of the filtration process.

It is generally desirable to adapt filtration devices for their specific uses, in particular for the specific quality of the water that is to be filtered by the filtration device. In the filtration device shown in EP 1 748 830 B9 the filter cartridge on one hand and the inlet funnel on the other are provided with corresponding fixing means for ensuring that a sealing rim of the filter cartridge comes into contact with an edge of the inlet funnel during insertion of the filter cartridge into the inlet funnel thereby making sure that a tight seal between the two is provided every time. These fixing means together further define a throttle, which limits the water flow through the filtration device. The manufacturer is thus able to influence the limitation of the water flow by the design of either the filter cartridge or the inlet funnel. It would however be advantageous if the water flow could be adjusted more precisely and to the specific needs of a user.

Many filter devices known in the state of the art generally provide only one "setting", meaning that the throughput of the filter device is always more or less the same. One exception can be found in EP 0 498 913 A1, which discloses a filtration device with a filter cartridge arranged in an inlet funnel and having a shutoff device in a bottom area with which varying flow rates of the filter cartridge can be set. The flow rate determines how long water is treated inside the filter cartridge so that the user may adjust the flow rate to the quality and in particular the hardness of the water that is to be filtered. Some of the embodiments enable the user to close all water outlets of the filter cartridge, which is generally undesirable, because a user might do this by accident before inserting the filter cartridge into the inlet funnel and then wonder why the water does not flow.

Another disadvantage of the filtration device of EP 0 498 913 A1 is that it is not possible to influence the throughput of the filtration device by means of the inlet funnel. The throughput is solely determined by the filter cartridge, since the water exits the filter cartridge directly into an area below the inlet funnel. For a broader range of settings it would be desirable to enable an influence of both the filter cartridge and the inlet funnel on the throughput of the filtration device.

It is therefore the object of the invention to provide more possibilities for adjusting the flow rate of filtration devices.

This object is solved by a filtration device according to claim 1.

The filtration device of the invention comprises an inlet funnel and a filter cartridge. The inlet funnel has a sealing seat and a chamber below the sealing seat, the chamber comprising an outer wall and a bottom wall, the bottom wall having an outlet.

The filter cartridge comprises a housing having a top side and a bottom side as well as a sealing rim located between the top side and the bottom side. The sealing rim and the sealing seat are complementary and form a seal, which prevents water from bypassing the filter cartridge when the filter cartridge is arranged in the inlet funnel. The filter cartridge has a protrusion that enters the outlet when the filter cartridge is inserted into the inlet funnel, thereby reducing a nominal cross-section of the outlet.

The protrusion has a switch that is movable, in particular relative to the housing, between a first position and a second position, such that in the first position the nominal cross-section is reduced to a flow area A and in the second position the nominal cross-section is reduced to a flow area B > A. The switch is preferably movable to further positions between the first and second positions resulting in flow areas Cₙ with B > Cₙ > A. This allows for a very precise adjustment of the flow area.

This configuration provides a broad range of possible flow rates. Different outlets with different nominal cross-sections as well as the manipulation of the switch will lead to different flow rates. As an example, it is thus possible for a manufacturer to offer two or more inlet funnels with outlets having different nominal cross-sections, one designed for low to medium water hardness, the second one designed for medium to high water hardness. The user may first choose one of the two most fitting for his or her use case and may additionally influence the degree of treatment taking place by adjusting the switch. Offering only one filter cartridge for all water hardness values would make it fiddly to adjust the water flow to the desired amount.

The filtration device is gravity-operated.

The inlet funnel preferably has an outer wall and a bottom wall even though these two walls may transition seamlessly into each other. The sealing seat is preferably formed by or integrally with the outer wall. Both the sealing seat and the outer wall are preferably two-fold rotationally symmetrical, in particular around a vertical central axis X of the filtration device.

The filtration device may comprise a container, in or on top of which the inlet funnel is placed. Water that exits the inlet funnel through the outlet is collected in the container.

The inlet funnel preferably has a single frustoconical projection arranged in a central position of the bottom wall. From the bottom wall the projection projects upwards. The projection comprises the outlet at its top end. Water that has been poured into the inlet funnel can flow through the outlet into an area below the inlet funnel.

The filter cartridge preferably comprises a housing having a cup shaped bottom part as well as a head part arranged on top of the bottom part. The head part and the bottom part define an interior, in which granular filter media such as active coal and/or ion exchange resin is arranged.

The head part preferably comprises a top side with water inlets and the bottom part comprises a bottom side with water outlets. The bottom side is preferably flat such that the filter cartridge can be placed on a flat surface without tipping over, e.g. when the user replaces filter cartridges. The housing preferably comprises a sealing rim between the top side and the bottom side, which is complementary to the sealing seat of the inlet funnel. The sealing rim is preferably two-fold rotationally symmetrical around the central axis X. The sealing seat and the sealing rim together form a sealing for prohibiting water from flowing around the filter cartridge into the area below the inlet funnel. All water poured into the inlet funnel is supposed to be filtered by the filter cartridge before flowing into said area.

The bottom part of the filter cartridge preferably comprises a frustoconical recess at the bottom side, preferably in a central position. The recess is generally larger in size in comparison to the projection and also extends vertically upwards from the bottom side. The projection is arranged in the recess when the filter cartridge is located in the inlet funnel.

The filter cartridge can be inserted into the inlet funnel such that the sealing rim and the sealing seat interact. In said position the recess is arranged over and around the projection, whereby a gap is defined in between and by the projection and the recess through which water may flow. Water entered into the inlet funnel thus flows from an area above the filter cartridge through the water inlets into the interior of the filter cartridge. The water exits the filter cartridge through the water outlets into a buffer volume defined by the bottom wall of the inlet funnel and the bottom side of the filter cartridge. From the buffer volume the water may flow through said gap to the outlet of the inlet funnel and through the outlet to the area below the inlet funnel.

The protrusion of the filter cartridge preferably comprises a pin extending vertically downwards from an upper end of the recess along the central axis X. The switch is preferably movable between the first position and the second position by rotation and/or translation relative to the pin. Since the filter cartridge is usually inserted into the inlet funnel by a vertical downwards motion the protrusion is automatically introduced into the outlet during said motion. Together with the alignment accomplished by the recess of the filter cartridge and the projection of the inlet funnel the placement of the filter cartridge in the inlet funnel is easy for the user. The pin is preferably formed integrally with a housing of the filter cartridge, limiting the complexity of the manufacturing process.

The pin preferably does not extend out of the recess. The switch is thus protected when the filter cartridge is placed on a flat surface. However, the switch is preferably arranged at least partially below the pin. The user can then easily manipulate the switch by holding the filter cartridge, in particular upside down, in one hand and handling the switch with the other.

The pin is preferably of a cylinder or hollow cylinder shape having an outer circumferential surface and optionally an inner circumferential surface, wherein the switch is guided by the outer circumferential surface and/or the inner circumferential surface of the pin. The switch may also be of a cylinder or hollow cylinder shape having an outer cylindrical surface and optionally an inner cylindrical surface. This maximizes the contact area between the pin and the switch when the pin is also of a cylinder or hollow cylinder shape. The switch is further preferably rotatable around the central axis X relative to the pin. A cylinder shape of the pin extending along the central axis X makes it easy to produce the housing of the filter cartridge by injection molding. The outer and the inner circumferential surfaces of the pin as well as the outer and inner cylindrical surfaces of the switch provide a relatively large contact area between the pin and the switch making the guide functionality provided by the pin reliable and easy to manufacture. If the pin has the shape of a hollow cylinder, the lower end, which is distal to the bottom side of the filter cartridge, may be closed shut. The lower end of the switch may also be closed shut if the switch is of a hollow cylinder shape.

The switch preferably has at least two segments with different cross-sections, in particular at least an upper first segment and a lower second segment, the first segment having a cross-section that is larger than the cross-section of the lower second segment. The switch is then arranged such that it reduces the nominal cross-section of the outlet with its first segment in the first position and with its second segment in the second position. The larger cross-section of the first segment leads to the flow area A and the smaller cross-section of the second segments to the flow area B > A. The switch can thus be manipulated by a simple movement along the central axis X.

All cross-sections are preferably determined perpendicular to the central axis X. The cross-section of a segment herein is preferably determined by its outermost parameter. A hollow cylinder (pipe) and a full cylinder of the same outer proportions then have the same cross-section whereas a cylinder with a groove and a cylinder of the same outer proportions without a groove have different cross-sections.

The switch preferably has a vertical groove in the lower second segment. The vertical groove reduces the cross-section of the lower segment and provides a channel-like structure for the water, thus providing good flow characteristics leading to a continuous flow of water.

In other embodiments the switch may have a cone-like shape. This allows for a continuous adjustment of the flow area.

The outlet preferably has the cross-section of a circle with an added notch such as the one known from EP 1 748 830 B9. In order to provide outlets with different nominal cross-sections, the outlet may be altered, in particular regarding the radius of the circle-portion or regarding the number and size of notches, for different filtration devices.

In some embodiments the pin and the switch comprise two pieces of a helical gear, wherein one of the pieces is assigned to the pin and the other to the switch and wherein the pieces interact to translate a rotational movement of the switch relative to the pin into a translational movement. Most preferably the pin comprises a helical guide on its outer circumferential surface and the switch has a lug at an inner cylindrical surface. With such an arrangement, the user may simply turn the switch thus moving it up and down for adjusting the flow area. The translational movement may particularly determine which of the segments has an effect on the reduction of the nominal cross-section of the outlet. In other embodiments the helical guide and lug may be assigned inversely to the pin and switch and/or may be located at other areas, such as an inner circumferential surface of the pin and an outer cylindrical surface of the switch.

In some embodiments the pin has a first window and the switch has a second window, wherein the switch can be arranged relative to the pin such that the windows overlap maximally, partially or not at all, and wherein the pin and the switch are hollow defining an interior, which is open-ended at the bottom of the protrusion and in fluid communication with the windows when the windows are overlapping. This allows water to flow from outside the protrusion into the interior and further downwards when the windows overlap at least partially thus providing an additional flow path for the water coming from the filter cartridge. If the windows are arranged such that they do not overlap at all, the nominal cross-section of the outlet is reduced to the flow area A. For example, if the switch is cylindrical and blocks the circular portion of a circular outlet having a notch, the flow area will then be essentially the notch of the outlet and the flow area of the filtration device is thus minimal. If the windows are instead arranged such that they overlap, the flow area is increased through the additional flow path described above. The maximum flow area is reached when the windows overlap maximally. In this case, the nominal cross-section is reduced to the flow area B.

In some embodiments the pin and the switch are connected by a joint having at least one circular groove and at least one circular tongue, the circular tongue being assigned to the pin or the switch and the circular groove to the respective other part of the protrusion, such that the joint locks the switch against axial movement relative to the pin. In a preferred embodiment, the pin has at least one circular groove extending around the central axis X on the inner circumferential surface and the switch has at least one circular tongue located on the outer cylindrical surface of the switch, the circular tongue being arranged in said circular groove such that the circular groove and the circular tongue lock the switch against axial movement relative to the pin. The switch is thus held by the tongue and groove in axial direction such that it can only be removed from the pin by excessive force. The tongue and groove arrangement thus offers a reliable mount for a switch that can be moved relative to the pin by rotation only. Additionally, the switch can be mounted onto the pin easily during production.

Movement of the switch relative to the pin, in particular rotational movement, is preferably limited by at least one stop of the pin and/or the switch, to which the respective other part abuts in predefined positions. In these predefined positions the flow area is also defined, making actuation of the switch intuitive and comprehensible. In particular, either the pin or the switch is provided with multiple stops that interact with one single stop of the respective other part. For example, in one embodiment the pin has one pin stop and the switch has two switch stops, such that one switch stop rests against the pin stop thus halting the switch in a position, in which the windows of the pin and the switch overlap maximally, and another switch stop halts the switch in a position, in which the windows do not overlap at all. The user could then move the switch between the two positions easily thereby regulating the amount of overlap of the windows.

The switch preferably has a vertically accessible slit. The slit is accessible from the bottom side of the filter cartridge in particular. This facilitates adjusting the switch from below the recess. A slit is particularly useful since it can be engaged by common "tools" such as a screw driver, a coin or a fingernail. In other embodiments the switch may also have other features for easing its adjustment, in particular a surface area providing higher grip, a handle, or a connector such as a socket for attaching a removable handling device or tool.

The inlet funnel preferably has a projection arranged in a central position of the bottom wall and extending upwards therefrom, the projection comprising the outlet at its top end and the recess of the filter certridge is arranged in a central position at the bottom side thereof, wherein the recess is arranged over and around the projection when the filter cartridge is inserted into the inlet funnel, whereby a gap is defined in between and by the projection and the recess.

The switch is preferably connected to or comprises a handle that extends out of the recess downwards. Most preferably, the switch is formed integrally with the handle. Adjusting the switch located in the recess can be fiddly. When the handle extends out of the recess, it is much easier for the user to adjust the switch. Additionally it is easier to determine in what position the switch is located.

The handle extending out of the recess preferably has a flange portion at its lower end. The flange portion most preferably extends generally perpendicular to the central axis X. A flange is relatively thin so that the overall height of the filter cartridge is not increased too much by the handle. However, the flange portion may be equipped with a surface area providing higher grip or the like.

In some embodiments the protrusion has a joint with a circular groove and a circular tongue, both extending around the central axis X, wherein the circular tongue and the circular groove interact only in the second position of the switch such that they lock the switch against axial movement relative to the pin. Either the circular groove or the circular tongue is arranged at the pin and the respective other part is arranged at the switch. In the first position, the switch is preferably axially movable relative to the pin. If the switch is moved to the second position, the switch is locked by the tongue and groove, which provides a feedback to the user that the desired position has been reached. The switch is preferably arranged such that it must be pushed towards the pin by the user for moving it into the second position. The switch and pin are preferably constructed such that the switch can be moved only once into the second position and that it cannot be moved back easily by the user. This gives the user an easy choice of either moving the switch to the second position or leaving it in the first position prior to use. The switch preferably has a push surface formed by a closed end at the bottom. This is particularly useful if the switch has the shape of a hollow cylinder. Pushing onto a closed surface is more pleasant than pushing onto the end of a hollow cylinder.

The problem of the invention is also solved by a filter cartridge for a filtration device as described above, the filter cartridge comprising a housing having a top side and a bottom side as well as a sealing rim located between the top side and the bottom side, the filter cartridge having a protrusion for entering into an outlet when the filter cartridge is inserted into the inlet funnel, thereby reducing a nominal cross-section of the outlet, wherein the filter cartridge has a switch that is movable between a first position and a second position, such that in the first position the nominal cross-section is reduced to a flow area A and in the second position the nominal cross-section is reduced to a flow area B > A.

The filter cartridge may have one or more of the features described above with reference to the filter cartridge of the filtration device according to the invention.

The filter cartridge is preferably adapted for usage in an inlet funnel according to EP 1 748 830 B9.

The invention will be described in detail with reference to the examples shown in the drawings, in which the following is shown:

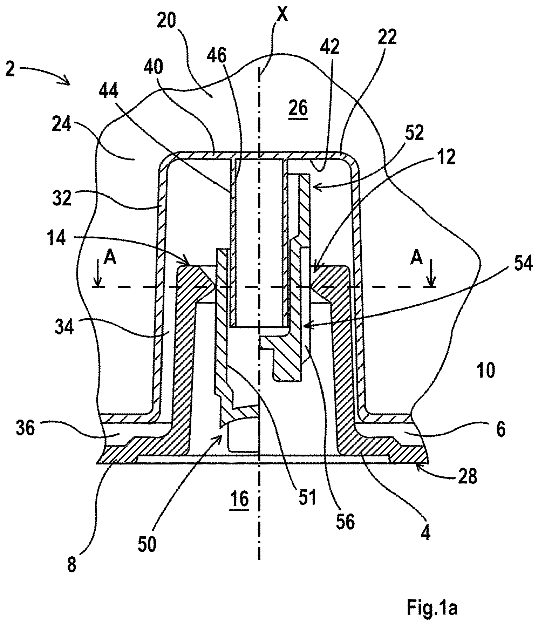

- Figure 1a: two settings of a first embodiment of a filter cartridge arranged in an inlet funnel in a sectional side view;
- Figure 1 b: the sectional view A-A of figure 1 a;
- Figure 2a: a second embodiment of a filter cartridge in a sectional side view;
- Figure 2b: the sectional view B-B of figure 2a;
- Figure 2c: the embodiment of figure 2a in a sectional perspective view;
- Figure 3a: a third embodiment of a filter cartridge in a sectional side view;
- Figure 3b: detail C of figure 3a;
- Figure 3c: the sectional view D-D of figure 3b;
- Figure 4a: a fourth embodiment of a filter cartridge in a sectional side view;
- Figure 4b: detail E of figure 4a;
- Figure 4c: the sectional view F-F of figure 4b;
- Figure 5a: two settings of a fifth embodiment of a filter cartridge in a sectional side view;
- Figure 5b: the sectional view G-G of figure 5a.

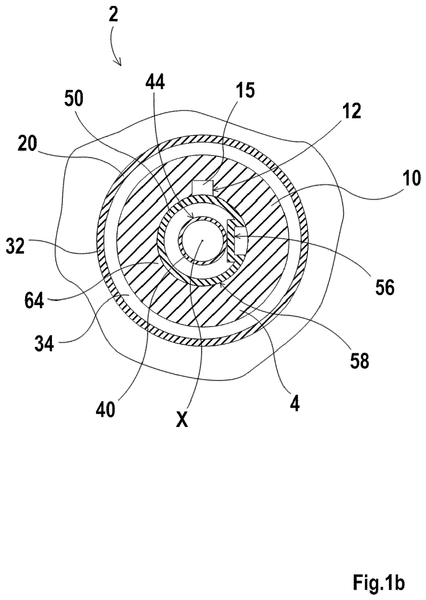

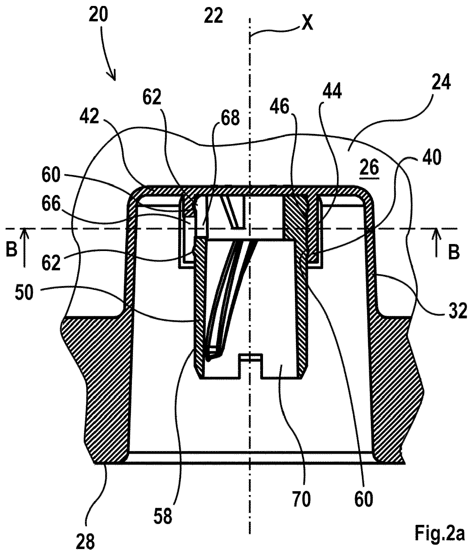

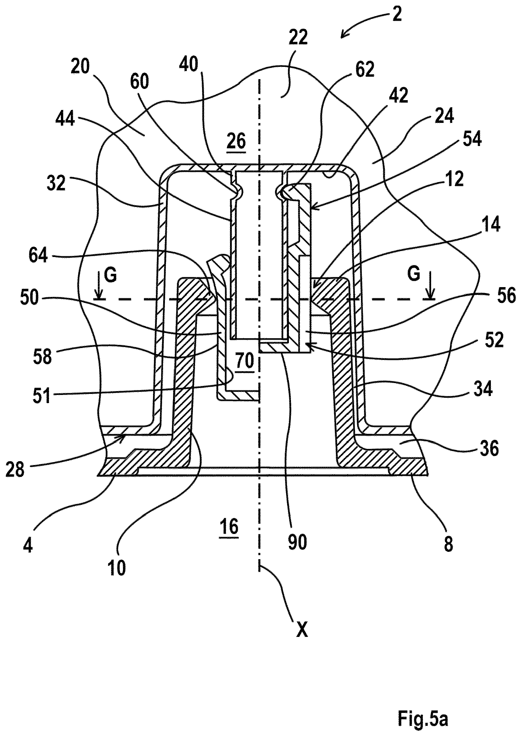

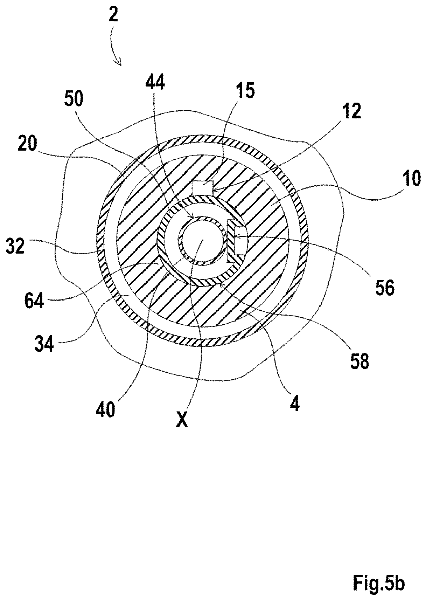

Figures 1a and 1b as well as 5a and 5b show a filtration device 2 comprising an inlet funnel 4 having an outer wall 6 and a bottom wall 8 and further comprising a filter cartridge 20 placed in said inlet funnel 4. Figures 2a to 4c show embodiments of filter cartridges 20 only, each of which may be placed in an inlet funnel 4 of the same kind for creating a filtration device.

The inlet funnel 4 has a sealing seat (not shown) formed by or integrally with the outer wall 6. Both the sealing seat and the outer wall 6 are two-fold rotationally symmetrical around a vertical central axis X of the filtration device 2. Water that is to be filtered can be poured into the inlet funnel 4 from above. The filtration device 2 is gravity operated.

The inlet funnel 4 has a single frustoconical projection 10 arranged in a central position of the bottom wall 8. From the bottom wall 8 the projection 10 projects upwards. The projection 10 comprises an outlet 12 at its top end 14. Said outlet 12 has the cross-section of a circle with an added notch 15. Water that has been poured into the inlet funnel 4 can flow through the outlet 12 into an area 16 below the inlet funnel 4. Said area 16 may be an inner volume of a container (not shown), in or onto which the inlet funnel 4 has been placed beforehand.

The filter cartridge 20 of all embodiments comprises a housing 22 having a cup shaped bottom part 24 as well as a head part (not shown) arranged on top of the bottom part 24. The head part and the bottom part 24 define an interior 26, in which granular filter media (not shown) comprising active coal as well as ion exchange resin is arranged.

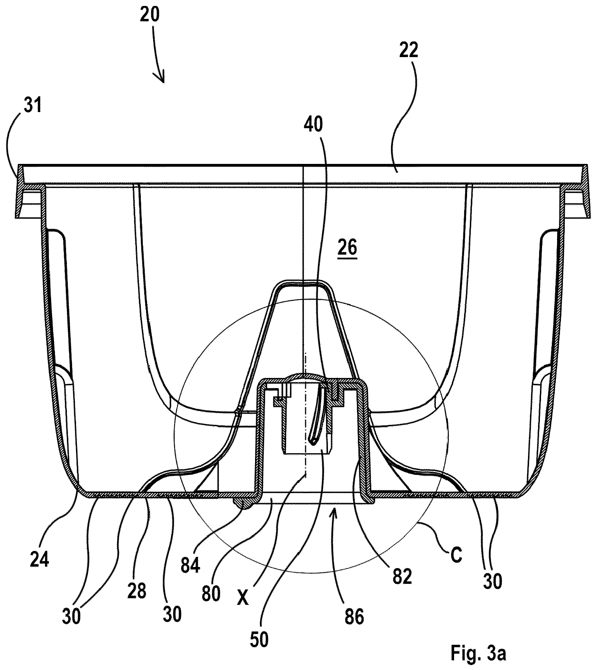

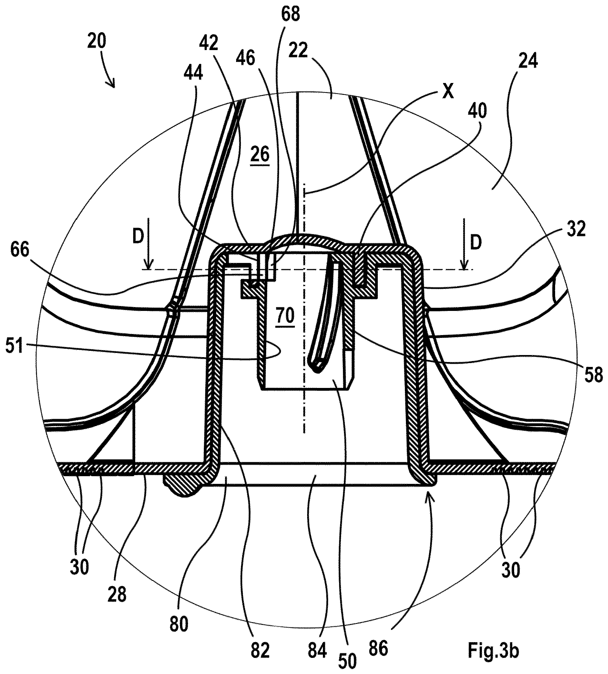

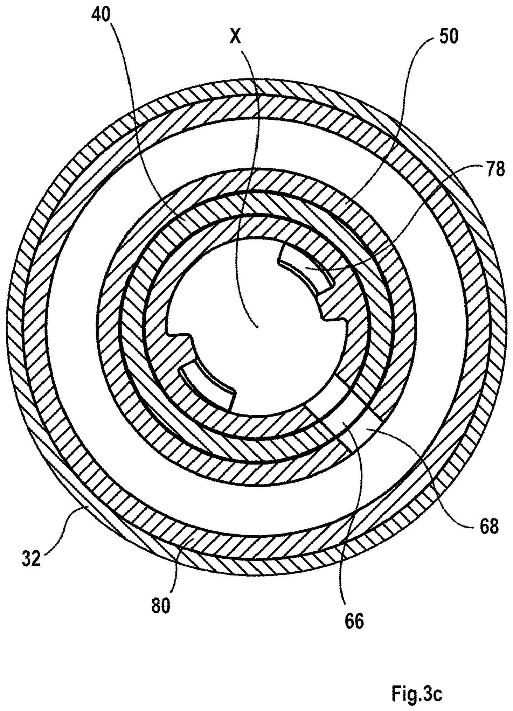

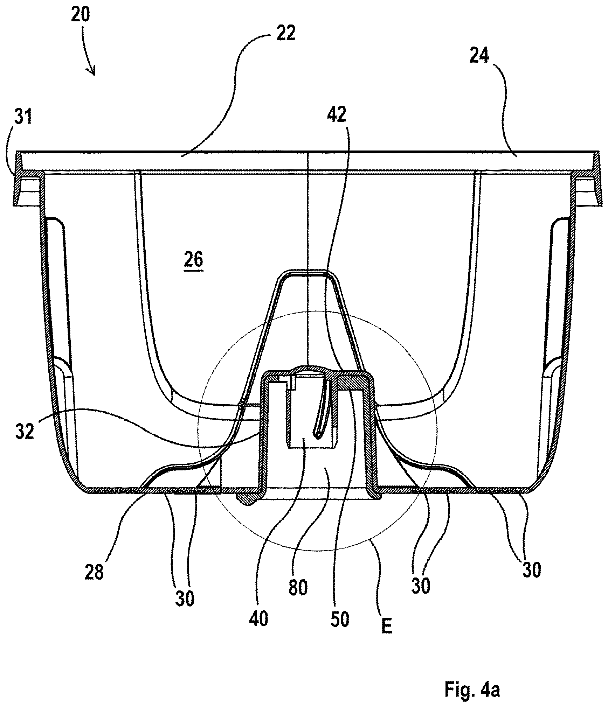

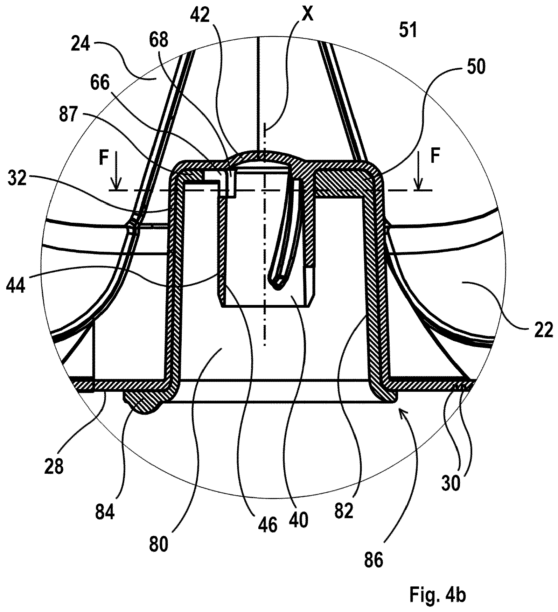

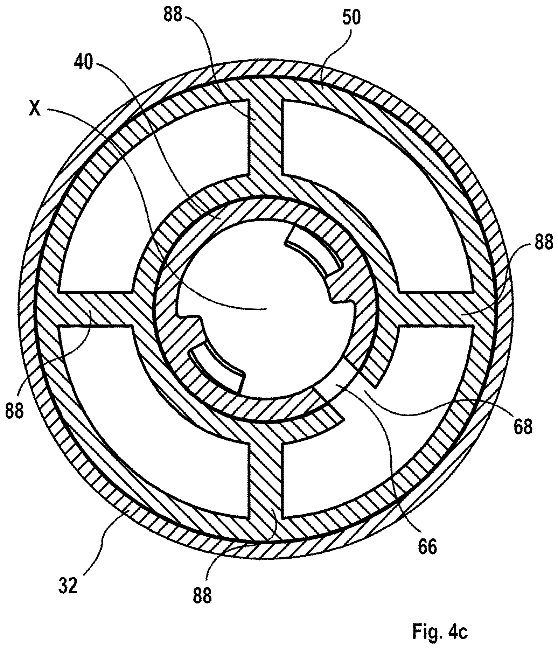

The head part comprises a top side with water inlets and the bottom part 24 comprises a bottom side 28 with water outlets 30 (only shown in Figures 3a, 3b and 4a, 4b). The housing 22 also comprises a sealing rim 31 (only shown in Figures 3a, 3b and 4a, 4b) between the top side and the bottom side 28, which is complementary to the sealing seat of the inlet funnel 4. The sealing seat and the sealing rim together form a sealing for prohibiting water from flowing around the filter cartridge 20 into the area 16 below the inlet funnel 4. All water poured into the inlet funnel 4 is supposed to be filtered by the filter cartridge 20 before flowing into said area 16.

The bottom part 24 of the filter cartridge 20 comprises a frustoconical recess 32, which is arranged in a central position at the bottom side 28. The recess 32 is generally larger than the projection 10 and also extends vertically upwards from the bottom side 28. The projection 10 is thus arranged in the recess 32 when the filter cartridge 20 is located in the inlet funnel 4.

The filter cartridge 20 of all embodiments can be inserted into the inlet funnel 4 such that the sealing rim and the sealing seat interact. In said position the recess 32 is arranged over and around the projection 10, whereby a gap 34 is defined in between and by the projection 10 and the recess through which water may flow. Water entered into the inlet funnel 4 thus flows from an area above the filter cartridge 20 through the water inlets into the interior 26 of the filter cartridge 20. The water exits the filter cartridge 20 through the water outlets 30 into a buffer volume 36 defined by the bottom wall 8 of the inlet funnel 4 and the bottom side 28 of the filter cartridge 20. From the buffer volume 36 the water may flow through said gap 34 to the outlet 12 of the inlet funnel 4 and through the outlet 4 to the area 16 below the inlet funnel 4.

In the first embodiment shown in figures 1a and 1b the filter cartridge 20 comprises a pin 40. Said pin 40 extends vertically downwards along the central axis X from an upper end 42 of the recess 32. The pin 40 is generally of a hollow cylinder shape having an outer circumferential surface 44 and an inner circumferential surface 46 and comprises a helical guide (not shown) on its outer circumferential surface 46.

A switch 50 in the form of a pipe is mounted on said pin 40. The switch 50 and the pin 40 together define a protrusion. The switch 50 comprises a lug (not shown) on an inner cylindrical surface 51, which interacts with the helical guide of the pin 40. By turning the switch 50 around the central axis X, its rotational movement is translated by the lug and helical guide into a translatory movement along the central axis X. The switch 50 thus moves up and down in relation to the pin 40. Figure 1a shows two settings of the filtration device 2, one in the left half and one in the right half. In other embodiments the helical guide may be arranged on the switch 50 and the lug on the pin 40.

The switch 50 has at least two segments 52, 54 with different cross-sections. All cross-sections are viewed perpendicular to the central axis X. In the embodiment shown an upper first segment 52 comprises a cross-section that is larger than the cross-section of a lower second segment 54. Both segments 52, 54 can interact with the outlet 12 of the inlet funnel 4 one at a time. To accomplish this the switch 50 is either moved up or down. If the switch 50 is arranged in a lower first position as shown in the left half of figure 1a the outlet 12 is blocked except for its notch 15. The nominal cross-section of the outlet 12 is thereby reduced to a flow area A determined by the size of the notch 15. If the switch 50 is arranged in an upper second position as shown in the right half of figure 1a and in figure 1b, a vertical groove 56 of the switch 50 provides an additional space for water to flow through the outlet 12 thereby reducing the nominal cross-section of the outlet 12 to a flow area B > A. The vertical groove 56 defines where the lower second segment 54 of the switch 50 begins and where it ends in an axial direction.

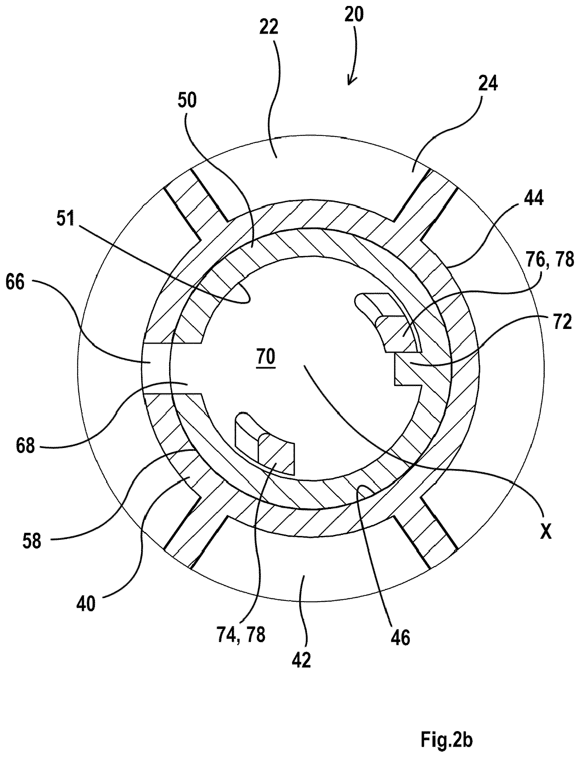

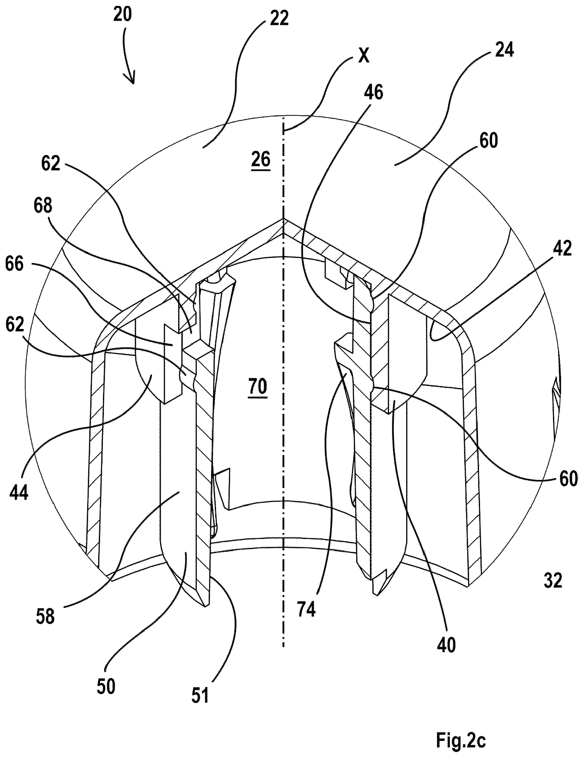

In a second embodiment shown in figures 2a, 2b, and 2c the filter cartridge 20 also comprises a cylindrical pin 40 extending vertically downwards along the central axis X from the upper end 42 of the recess 32 at the bottom side 28 of the filter cartridge 20. The filter cartridge 20 further comprises a switch 50 of a pipe like shape. The switch 50 is carried in said pin 40 such that an outer cylindrical surface 58 of the switch 50 interacts with the inner circumferential surface 46 of the pin 40. The pin 40 has two circular grooves 60 extending around the central axis X on the inner circumferential surface 46 and arranged at different heights. The switch 50 has two circular tongues 62 corresponding with and arranged in said circular grooves 60 such that the switch 50 is rotatable around the central axis X relative to the pin 40. The circular grooves 60 and the circular tongues 62 together form a joint between the pin 40 and the switch 50.

The switch 50 has a cross-section chosen such that when the filter cartridge 20 is arranged in the inlet funnel 4 the outer cylindrical surface 58 of the switch 50 comes into contact with an outlet rim 64 (see figure 1a) of the outlet 12 of the inlet funnel 4 thus blocking the outlet 12 except for the notch 15.

The pin 40 has a first window 66 and the switch 50 has a second window 68. The pin 40 and the switch 50 are hollow and open-ended at the bottom. The windows 66, 68 allow a passage of water into an interior 70 of the protrusion. Both windows 66, 68 are identical in width. The switch 50 can be arranged relative to the pin 40 such that the windows 66, 68 overlap maximally, partially or not at all. If the windows 66, 68 do not overlap, the nominal cross-section of an outlet 12 of an inlet funnel 4 into which the filter cartridge 20 has been inserted is reduced to a flow area A defined by a notch as shown in figures 1a and 1b. The relative positions of the windows 66, 68 are chosen by rotating the switch 50 relative to the pin 40. If the windows 66, 68 are arranged such that they overlap, water may flow from the gap 34 between the projection 10 and the recess 32 through the windows 66, 68 into the interior 70 of the switch 50. Since the switch 50 is pipe shaped, the water may than flow downwards and out into the area 16 below the inlet funnel 4. The switch 50 and pin 40 thus provide an additional flow path for the water, which results in a higher throughput of the filter cartridge 20. As a result the nominal cross-section of the outlet 12 is reduced to a flow area B > A when the filter cartridge 20 is placed in the inlet funnel 4 if the windows 66, 68 overlap maximally. The flow rate may be chosen by the user by having the windows 66, 68 overlap partially, maximally or not at all.

The rotation of the switch 50 in the pin 40 is limited. In the embodiment shown a switch stop 72 is provided in the switch 50 with which the switch 50 will abut against a first pin stop 74 of the pin 40 at a first position, in which the windows 66, 68 are not overlapping at all. The pin 40 also comprises a second pin stop 76 to which the switch stop 72 abuts in a second position, in which the windows 66, 68 are overlapping maximally as shown in Figure 2b. The pin stops 74, 76 are formed by two elements 78 arranged in the interior 70. In this embodiments, the pin stops 74, 76 are only indirectly attached to the pin 40 since both the pin 40 and the pin stops 74, 76 are formed in one piece with the housing 22 by injection molding.

In a third embodiment shown in figures 3a to 3c the filter cartridge 20 comprises a pin 40 arranged at the upper end 42 of the recess 32. Only the bottom part 24 of the filter cartridge 20 is shown. The pin 40 is relatively short and has a hollow cylindrical form with a first window 66.

The filter cartridge 20 also comprises a switch 50, which comprises a hollow cylindrical part arranged in the pin 40 such that the outer cylindrical surface 58 of the switch 50 abuts to the inner circumferential surface 46 of the pin 40. The switch 50 is further arranged such that its inner cylindrical surface 51 is guided by the outer circumferential surface 46 of the pin 40. This arrangement stabilizes the switch 50. The hollow cylindrical part is slightly tapered mainly for manufacturing reasons, but is referred to as cylindrical nonetheless.

The switch 50 has a second window 68, which can be brought into and out of overlap with the first window 66 by turning the switch 50 relative to the pin 40. In a first position of the switch 50 the windows 66, 68 do not overlap at all. If the filter cartridge 20 is placed in an inlet funnel 4 with the switch 50 in the first position, the nominal cross-section of the outlet 12 of the inlet funnel 4 is reduced to a flow area A defined by a notch as shown in figures 1a and 1b. In the second position of the switch 50 shown in figures 3a to 3c, the windows 66, 68 overlap maximally such that the nominal cross-section is reduced to a flow area B > A. Water can then enter into the interior 70 of the protrusion and flow downwards, thereby increasing the throughput of the filtration device 2.

In the interior 70 of the switch 50 two helical elements are arranged that may interact with other elements of the inlet funnel not shown here.

The switch 50 of this embodiment is integrally connected to a handle 80, which is adapted to the form of the recess 32. The handle 80 thus has a generally frustoconical main portion 82, which extends out of the recess 32 downwards and has a flange portion 84 at its lower end 86. The handle 80 can thus be easily manipulated by a user before inserting the filter cartridge 20 into the inlet funnel 4. Turning the handle 80 relative to the bottom part 24 of the filter cartridge 20 results in a rotation of the switch 50 around the central axis X and thus to a change in the flow rate of the filter cartridge 20.

Figures 4a to 4c show a fourth embodiment of a filter cartridge 20. Only the bottom part 24 is shown. The pin 40 extends downwards from the upper end 42 of the recess 32. In the inside of the pin 40 two helical elements are again attached to the inner circumferential surface 46. The pin 40 comprises a first window 66 through which water may enter into the interior of the pin 40.

The filter cartridge 20 comprises a switch 50. In this embodiment the switch 50 is arranged around the pin 40 such that the inner cylindrical surface 51 of the switch 50 abuts to the outer circumferential surface 44 of the pin 40. The switch 50 may be rotated relative to the pin 40 around the central axis X.

The switch 50 comprises a second window 68. By rotating the switch 50 around the pin 40 the windows 66, 68 may be brought into overlap as it is shown in the figures. The windows 66, 68 may also be brought out of overlap such that no water can access the interior of the pin 40 via the windows 66, 68. If the filter cartridge 20 is placed in an inlet funnel 4 with the switch 50 in the first position, the nominal cross-section of the outlet 12 of the inlet funnel 4 is reduced to a flow area A defined by a notch 15 as shown in figures 1a and 1b. In the second position of the switch 50 shown in figures 3a to 3c, the windows 66, 68 overlap maximally such that the nominal cross-section is reduced to a flow area B > A, since water can enter into the interior 70 of the protrusion and flow downwards thus increasing the throughput of the filtration device 2.

The switch 50 also comprises a handle 80 integrally formed with the switch 50 with which it may be easily rotated by a user. The handle 80 comprises a frustoconical main portion 82, at the lower end 86 of which a flange portion 84 is arranged. The flange portion 84 is easily accessible, because it is located outside of the recess 32. The user may simply turn the flange portion 84 thus changing the relative location of the windows 66, 68. The handle 80 is connected to the portion of the switch 50 that is arranged at the pin 40 by a base plate 87 and four ribs 88. The use of beams provides high stability for the switch 50 while limiting the amount of material used.

A fifth embodiment is shown in figures 5a and 5b. In said embodiment a pin 40 is arranged at the upper end 42 of the recess 32, the pin 40 extending downwards. A switch 50 having a pipe shape with a closed end 90 is arranged on the pin 40, such that the pin 40 is arranged partially in the interior 70 of the protrusion. Along the extension of the central axis X the switch 50 has two segments 52, 54 with different cross-sections perpendicular to the central axis X. In an upper first segment 52 the cross-section is chosen such that the outer perimeter of said cross-section contacts the outlet rim 64 thereby blocking the outlet 12 except for the notch 15. In a lower second segment 54 the switch 50 has a vertical groove 56 providing a second flow path for water filtered by the filter cartridge 20.

The switch 50 has a circular tongue 62 and the pin 40 has a circular groove 60, both extending around the central axis X. In a first position of the switch 50 illustrated in the left half of figure 5a the upper first segment 52 is arranged in the outlet 12 such that water may flow only through the notch 15. The nominal cross-section of the outlet 12 is thereby reduced to a flow area A defined by the size of the notch 15. The circular tongue 62 lies on the outer circumferential surface 44 of the pin 40 below the circular groove 60. This is the standard arrangement of the switch 50. The user now has the option of pushing the switch 50 upwards into a second position before inserting the filter cartridge 20 into the inlet funnel 4. When the switch 50 is pushed upwards, the circular tongue 62 slides into the circular groove 64 thus locking the switch 50 against further axial movement (both upwards and downwards) in the second position as shown in the right half of figure 5b. In the second position the vertical groove 56 will provide an additional flow path thus increasing the throughput of the filter cartridge 20. The nominal cross-section of the outlet 12 is then reduced to a flow area B > A defined by the size of the notch 15 and additionally the size of the vertical groove 56. Once the switch 50 has been moved to the second position, it can't be moved back easily (only by excessive force, destruction or by using tools). The user can thus increase the throughput for a single filter cartridge 20 once and it will stay that way through the lifetime of this individual filter cartridge 20.

### List of references

- 2: filtration device
- 4: inlet funnel
- 6: outer wall
- 8: bottom wall
- 10: projection
- 12: outlet
- 14: top end
- 15: notch
- 16: area

- 20: filter cartridge
- 22: housing
- 24: bottom part
- 26: interior
- 28: bottom side
- 30: water outlet
- 31: sealing rim
- 32: recess
- 34: gap
- 36: buffer volume

- 40: pin
- 42: upper end
- 44: outer circumferential surface
- 46: inner circumferential surface

- 50: switch
- 51: inner cylindrical surface
- 52: first segment
- 54: second segment
- 56: vertical groove
- 58: outer cylindrical surface
- 60: circular groove
- 62: circular tongue
- 64: outlet rim
- 66: first window
- 68: second window
- 70: interior
- 72: switch stop
- 74: first pin stop
- 76: second pin stop
- 78: element
- 80: handle
- 82: main portion
- 84: flange portion
- 86: lower end
- 87: base plate
- 88: rib

- 90: closed end

- X: central axis

## Claims

1. Filtration device (2) comprising an inlet funnel (4) and a filter cartridge (20),
the inlet funnel (4) having a sealing seat and a chamber below the sealing seat, the chamber comprising an outer wall and a bottom wall (8),
the bottom wall (8) having an outlet (12),
the filter cartridge (20) comprising a housing (22) having a top side and a bottom side (28) as well as a sealing rim (31) located between the top side and the bottom side (28),
the filter cartridge (20) having a protrusion that enters the outlet (12) when the filter cartridge (20) is inserted into the inlet funnel (4), thereby reducing a nominal cross-section of the outlet (12),
**characterized in that** the protrusion has a switch (50) that is movable between a first position and a second position, such that in the first position the nominal cross-section is reduced to a flow area A and in the second position the nominal cross-section is reduced to a flow area B > A.

2. Filtration device (2) according to claim 1,
**characterized in that** the filter cartridge (20) comprises a recess (32) at the bottom side (28),
**in that** the protrusion comprises a pin (40) extending vertically downwards from an upper end (42) of the recess (32) along a central axis (X) and **in that** the switch (50) is movable between the first position and the second position by rotation and/or translation relative to the pin (40).

3. Filtration device (2) according to claim 2,
**characterized in that** the pin (40) is of a cylinder or hollow cylinder shape having an outer circumferential surface (44) and optionally an inner circumferential surface (46), wherein the switch (50) is guided by the outer circumferential surface (44) and/or the inner circumferential surface (46) of the pin (40).

4. Filtration device (2) according to any of the preceding claims,
**characterized in that** the switch (50) has at least two segments (52, 54) with different cross-sections, in particular at least an upper first segment (52) and a lower second segment (54), the first segment (52) having a cross-section that is larger than the cross-section of the lower second segment (54).

5. Filtration device (2) according to claim 4,
**characterized in that** the switch (50) has a vertical groove (56) in the lower second segment (54).

6. Filtration device (2) according to any of claims 2 to 5,
**characterized in that** the pin (40) and the switch (50) comprise two pieces of a helical gear, wherein the pieces interact to translate a rotational movement of the switch (50) relative to the pin (40) into a translational movement.

7. Filtration device (2) according to any of claims 2 to 6,
**characterized in that** the pin (40) has a first window (66) and the switch (50) has a second window (68), wherein the switch (50) can be arranged relative to the pin (40) such that the windows (66, 68) overlap maximally, partially or not at all, and wherein the pin (40) and the switch (50) are hollow defining an interior (70), which is open-ended at the bottom of the protrusion and in fluid communication with the windows (66, 68) when the windows (66, 68) are overlapping.

8. Filtration device (2) according to any of claims 2 to 5 or 7,
**characterized in that** the switch (50) is of a cylinder or hollow cylinder shape and rotatable around the central axis (X) relative to the pin (40) and
**in that** the pin (40) and the switch (50) are connected by a joint having at least one circular groove (60) and at least one circular tongue (62) such that the joint locks the switch (50) against axial movement relative to the pin (40).

9. Filtration device (2) according to any of claims 2 to 8,
**characterized in that** movement of the switch (50) relative to the pin (40) is limited by at least one stop (74, 76) of the pin (40) and/or the switch (50).

10. Filtration device (2) according to any of claims 2 to 5,
**characterized in that** the switch (50) has a vertically accessible slit.

11. Filtration device (2) according to any of claims 2 to 10,
**characterized in that** the inlet funnel (4) has a projection (10) arranged in a central position of the bottom wall (8), the projection (10) comprising the outlet (12) at its top end (14) and
**in that** the recess (32) is arranged in a central position at the bottom side (28),
wherein the recess (32) is arranged over and around the projection (10) when the filter cartridge (20) is inserted into the inlet funnel (4), whereby a gap (34) is defined in between and by the projection (10) and the recess (32).

12. Filtration device (2) according to claim 11,
**characterized in that** the switch (50) is connected to a handle (80) that extends out of the recess (32) downwards.

13. Filtration device (2) according to any of claims 2 to 5,
**characterized in that** the protrusion has a joint with a circular groove (60) and a circular tongue (62), both extending around the central axis (X), wherein the circular tongue (62) and the circular groove (60) interact only in the second position of the switch (50) such that they lock the switch (50) against axial movement relative to the pin (40).

14. Filtration device (2) according to any of the preceding claims,
**characterized in that** the switch (50) has a push surface formed by a closed end (90) at the bottom.

15. Filter cartridge (20) for a filtration device (2) according to any of the preceding claims, the filter cartridge (20) comprising a housing (22) having a top side and a bottom side (28) as well as a sealing rim (31) located between the top side and the bottom side (28), the filter cartridge (20) having a protrusion for entering into an outlet (12) when the filter cartridge (20) is inserted into the inlet funnel (4), thereby reducing a nominal cross-section of the outlet (12),
wherein the filter cartridge (20) has a switch (50) that is movable between a first position and a second position, such that in the first position the nominal cross-section is reduced to a flow area A and in the second position the nominal cross-section is reduced to a flow area B > A.
